# EUROPEAN PATENT APPLICATION

(11) **EP 4 324 666 A1**
(43) Date of publication of application: **21.02.2024**
(21) Application number: 22787504.4
(22) Date of filing: 12.04.2022
(51) Int. Cl.: B60H 1/00, F28D 9/00, F16K 11/074

(54) **FLUID MANAGEMENT APPARATUS**

(30) Priority: 13.04.2021 CN 202110393798; 13.04.2021 CN 202110393799
(71) Applicant: Zhejiang Sanhua Automotive Components Co., Ltd., Hangzhou, Zhejiang 310018 (CN)
(72) Inventor: JIANG, Zhengang, Hangzhou Economic&technological Development Area Hangzhou, Zhejiang 310018 (CN); PENG, Yaqian, Hangzhou Economic&technological Development Area Hangzhou, Zhejiang 310018 (CN); HE, Lingxiao, Hangzhou Economic&technological Development Area Hangzhou, Zhejiang 310018 (CN); ZHANG, Zhenjie, Hangzhou Economic&technological Development Area Hangzhou, Zhejiang 310018 (CN)
(74) Representative: Epping - Hermann - Fischer
(86) International application number: PCT/CN2022/086233
(87) International publication number: WO 2022/218278

(57) **Abstract**

A fluid management apparatus (10). Along the stacking direction of plates, a first heat exchange module (120) is located on one side of a connecting member (200), and a second heat exchange module (110) is located on the other side of the connecting member (200). A fluid management module (300), the first heat exchange module (120) and the second heat exchange module (110) are located on different sides of the connecting member (200). At least a part of the fluid management module (300) is located between a first side portion (210) and a second side portion (220), which helps to reduce the volume of the fluid management apparatus (10). The mass center of the fluid management apparatus (10) is also relatively close to the connecting member (200), and the fluid management apparatus (10) is thus also more stable. Furthermore, the heat exchange module (100) and the fluid management module (300) are located on different sides of the connecting member (200), which helps to prevent the heat exchange module (100) from interfering with the fluid management module (300) during heat exchange.

## Description

This application claims the priority to Chinese Patent Application No. 202110393798.0, titled "FLUID MANAGEMENT APPARATUS" and filed with the China National Intellectual Property Administration on April 13th, 2021, and Chinese Patent Application No. 202110393799.5, titled "FLUID MANAGEMENT APPARATUS" and filed with the China National Intellectual Property Administration on April 13th, 2021, the entire application of which are incorporated herein by reference.

### FIELD

This application relates to the technical field of fluid management, in particular to a fluid management apparatus.

### BACKGROUND

A thermal management system includes some functional components, which are arranged at different positions. In other word, these functional components are distributed at different positions of the thermal management system. The functional components need to be connected to form a thermal management system through pipelines, and the pipelines between functional components are the flow paths for the fluid. It is a technical problem to propose a fluid management assembly which in turn facilitates the optimization of the thermal management system.

### SUMMARY

An object of this application is to provide a fluid management apparatus to contribute to solve the above problem.

A fluid management apparatus is provided according to an embodiment of the application, the fluid management apparatus includes a heat exchange module, a fluid management module and a connecting member. The fluid management apparatus is provided with a communication passage, at least a part of the communication passage is located at the connecting member, and the communication passage is in communication with a flow passage of the heat exchange module. At least a part of the fluid management module is fixedly or limitedly connected to the connecting member. The fluid management module includes a valve core that is provided with a conduction passage. The fluid management module is provided with a throttling chamber, a valve chamber and a first gas-liquid separation chamber. The valve chamber is in communication with the communication passage, and the valve core is located in the valve chamber. In an operating state of the fluid management apparatus, the valve core is able to communicate the valve chamber with the first gas-liquid separation chamber through the throttling chamber or through the conduction passage.

The heat exchange module includes at least one of a first heat exchange module and a second heat exchange module. The connecting member includes a first side portion and a second side portion, the second heat exchange module is fixedly or limitedly connected to the first side portion, and the first heat exchange module is fixedly or limitedly connected to the second side portion. The heat exchange module includes multiple stacked plates, in the stacking direction of the plates, at least a part of the first heat exchange module is located on one side of the connecting member, at least a part of the second heat exchange module is located on the other side of the connecting member, the first heat exchange module and the second heat exchange module are located on different sides of the connecting member, and at least a part of the fluid management module is located between the first side portion and the second side portion.

In the fluid management apparatus provided according to the embodiment of the application, in the stacking direction of the plates, the first heat exchange module is located on one side of the connecting member, and the second heat exchange module is located on the other side of the connecting member. The fluid management module, the first heat exchange module and the second heat exchange module are located on different sides of the connecting member. At least a part of the fluid management module is located between the first side portion and the second side portion, which is beneficial to reduce the volume of the fluid management apparatus. The mass center of the fluid management apparatus is also relatively close to the connecting member, and thus the fluid management apparatus is also more stable. Furthermore, the heat exchange module and the fluid management module are located on different sides of the connecting member, which is beneficial to prevent the heat exchange module from interfering with the fluid management module during heat exchange.

### BRIEF DESCRIPTION OF THE DRAWINGS

Fig. 1 is a schematic view of a three-dimensional structure of a first embodiment of a fluid management apparatus from one perspective;
Fig. 2 is a schematic view of the three-dimensional structure of the fluid management apparatus in Fig. 1 from another perspective;
Fig. 3 is a schematic exploded structural view of the fluid management apparatus in Fig. 1 from one perspective;
Fig. 4 is a schematic view of an exploded structure of the fluid management apparatus in Fig. 1 from another perspective;
Fig. 5 is a schematic exploded structural view of a connecting member in Fig. 1 from one perspective;
Fig. 6 is a schematic view of the three-dimensional structure of the connecting member in Fig. 4 from another perspective;
Fig. 7 is a schematic perspective view of the connecting member in Fig. 5;
Fig. 8 is a schematic view of a three-dimensional structure of a first block and a first control portion being assembled in Fig. 1;
Fig. 9 is a schematic view of the structure of the first block and the first control portion being assembled in Fig. 8 from one perspective;
Fig. 10 is a schematic sectional structural view of Fig. 9 taken along line A-A;
Fig. 11 is a schematic top view of the fluid management apparatus in Fig. 1;
Fig. 12 is a schematic sectional view of Fig. 11 taken along the line D-D;
Fig. 13 is a schematic view of an exploded structure of another embodiment of the fluid management apparatus;
Fig. 14 is a schematic top view of a thermal management module in Fig. 13;
Fig. 15 is a schematic sectional view of Fig. 14 taken along the line C-C.

### DETAILED DESCRIPTION OF THE EMBODIMENTS

The fluid management apparatus according to the technical solutions of the present invention may have various embodiments, wherein at least one of the embodiments may be applied to a vehicle thermal management system, and at least one of the embodiments may be applied to other thermal management systems such as a household thermal management system or a commercial thermal management system. The following is an example of a fluid management apparatus applied to a thermal management system of a vehicle, illustrated in conjunction with the accompanying drawings, and the fluid is a refrigerant, including R134a or CO₂ or refrigerant in other forms.

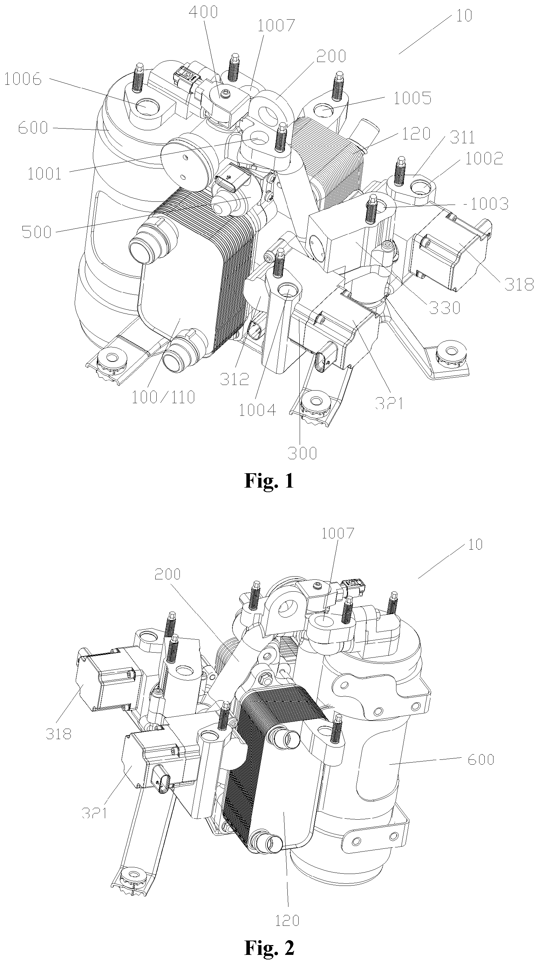

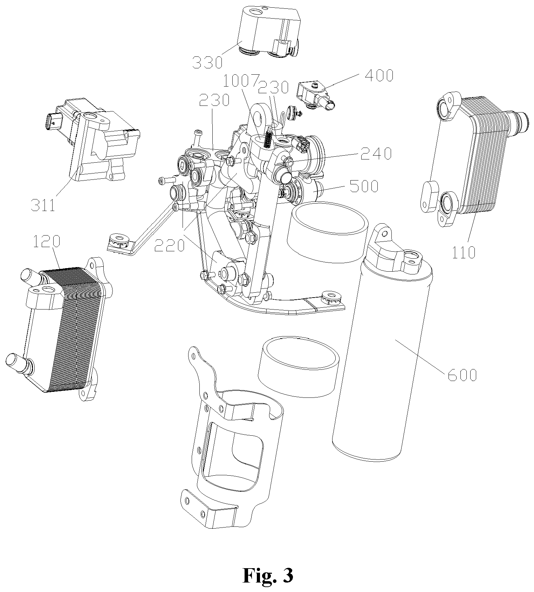

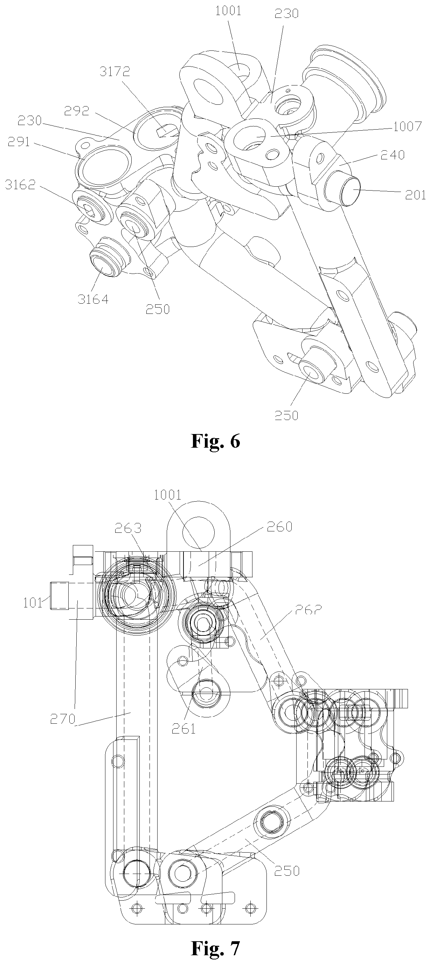

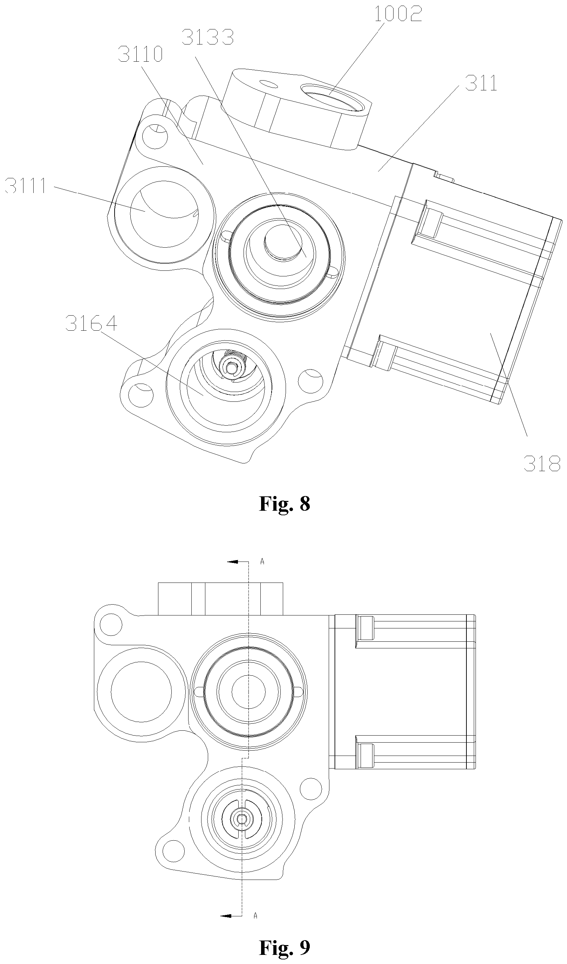

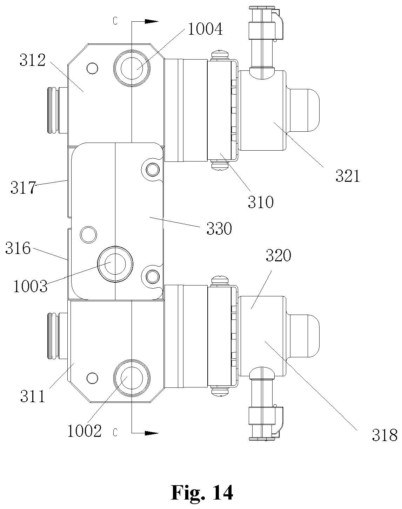

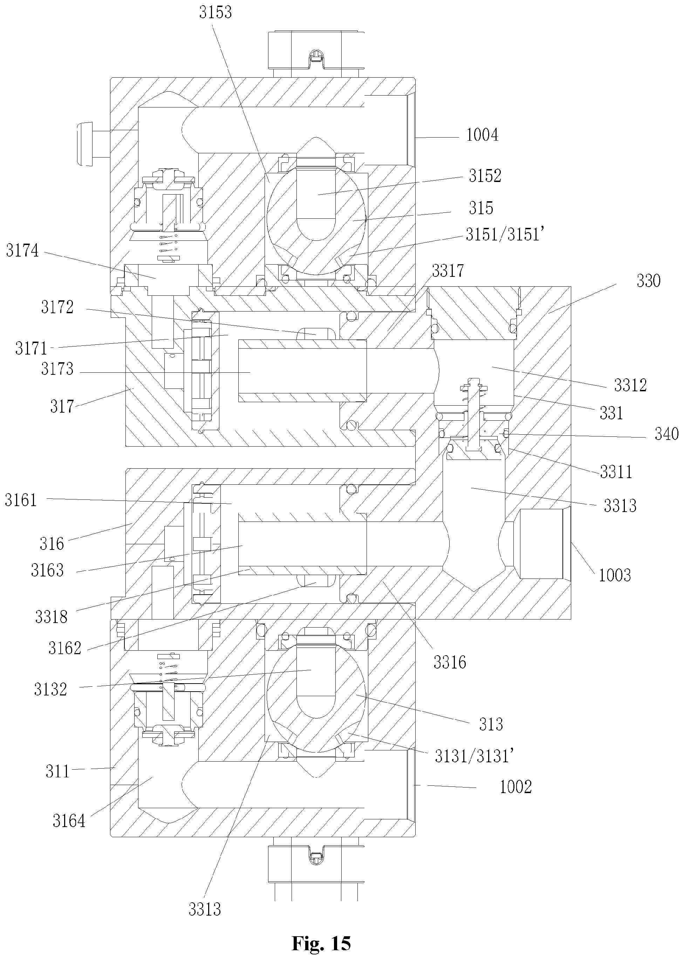

Referring to Fig. 1 to Fig. 15, a fluid management apparatus 10 includes a heat exchange module 100, a fluid management module 300 and a connecting member 200. The fluid management apparatus 10 has a communication passage, at least a part of the communication passage is located at the connecting member 200, and the communication passage is in communication with a flow passage of the heat exchange module 100. At least a part of the fluid management module 300 is in a fixed or limited connection with the connecting member 200. Herein, the term "fixed connection" includes welding, bonding and integrated structure. The fluid management module 300 includes a valve core having a conduction passage. The fluid management module 300 has a throttling chamber, a valve chamber and a first gas-liquid separation chamber. The valve chamber is in communication with the communication passage, and the valve core is located in the valve chamber. In one operating state of the fluid management apparatus 10, the valve core is able to communicate the valve chamber with the first gas-liquid separation chamber through the throttling chamber or the conduction passage. The heat exchange module 100 includes several stacked plates, and the connecting member 200 includes a first side portion 210 and a second side portion 220. In the stacking direction of the plates, the first side portion 210 is located on one side of the connecting member 200, and the second side portion 220 is located on the opposite side of the connecting member 200. The side where the first side portion 210 is located and the side where the second side portion 220 is located are different sides of the connecting member 200. The heat exchange module 100 is fixedly or limitedly connected to the connecting member 200. Specifically, the heat exchange module 100 includes at least one of a first heat exchange module 120 and a second heat exchange module 110. In this embodiment, the heat exchange module 100 includes a second heat exchange module 110 and a first heat exchange module 120, where both the first heat exchange module 120 and the second heat exchange module 110 are plate heat exchangers. The second heat exchange module 110 is fixedly or limitedly connected to the first side portion 210, and the first heat exchange module 120 is fixedly or limitedly connected to the second side portion220. In this way, in the stacking direction of the plates, at least a part of the first heat exchange module 120 is located on one side of the connecting member 200, and at least a part of the second heat exchange module 110 is located on the other side of the connecting member 200. The first heat exchange module 120 and the second heat exchange module 110 are located on different sides of the connecting member 200. In the stacking direction of the plates, at least a part of the fluid management module 300 is located between the first side portion 210 and the second side portion 220. In the stacking direction of the plates, the first heat exchange module 120 is located on one side of the connecting member 200, the second heat exchange module 110 is located on the other side of the connecting member 200, the fluid management module 300, the first heat exchange module 120 and the second heat exchange module 110 are located on different sides of the connecting member 200, and at least a part of the fluid management module 300 is located between the first side portion 210 and the second side portion 220, which is beneficial to reduce the volume of the fluid management apparatus 10. The mass center of the fluid management apparatus 10 is also relatively close to the connecting member 200, and thus the fluid management apparatus 10 is also more stable. In addition, the heat exchange module 100 and the fluid management module 300 are located on different sides of the connecting member 200, which is also beneficial to prevent the heat exchange module 100 from interfering with the fluid management module 300 during heat exchange. In this embodiment, during operation of the fluid management apparatus 10, the fluid in the first flow passage of the first heat exchange module 120 and the fluid in the first flow passage of the second heat exchange module 110 are refrigerant, and the fluid in the second flow passage of the first heat exchange module 120 and the fluid in the second flow passage of the second heat exchange module 110 are coolant.

Referring to Fig. 1, Fig. 2, Fig. 3, Fig. 4 and Fig. 7, the fluid management apparatus 10 further includes a fluid management component, and the connecting member 200 includes a mounting portion 280, which is provided with a mounting hole. At least a part of the fluid management component is located in the mounting hole. In this embodiment, the fluid management component includes a throttling unit 500 and a valve unit 400. Accordingly, the mounting portion 280 includes a first mounting portion with a first mounting hole 281 and a second mounting portion with a second mounting hole 282. At least a part of the valve unit 400 is located in the first mounting hole 281, and the valve unit 400 is fixedly or limitedly connected to the first mounting portion. At least a part of the throttling unit 500 is located in the second mounting hole 282, and the throttling unit 500 is fixedly or limitedly connected to the second mounting portion. The fluid management apparatus 10 has a communication passage, at least a part of the communication passage is located at the connecting member 200, and the fluid management component can adjust an opening degree of the communication passage and/or open/close of the communication passage. Specifically, the communication passage includes a first communication passage 250, a second communication passage 260 and a third communication passage 270, wherein the second communication passage 260 includes a first sub-passage 261, a second sub-passage 262 and a third sub-passage 263. A wall of the second mounting portion has a port that is in communication with the first sub-passage 261, and the throttling unit 500 can adjust the opening degree of the first sub-passage 261. A wall of the first mounting portion has a port that is in communication with the third sub-passage 263, and the valve unit 400 can open and close the third sub-passage 263. The third sub-passage 263 is in communication with the third communication passage. The first heat exchange module 120 has a first flow passage and a second flow passage, and the second heat exchange module 110 also has a first flow passage and a second flow passage. The first communication passage 250 has a port facing the first heat exchange module 120 at the second side portion 220, and the first flow passage of the first heat exchange module 120 is in communication with the first communication passage 250. The first sub-passage 261 has a port facing the second heat exchange module 110 at the first side portion 210, and the first flow passage of the second heat exchange module 110 is in communication with the first sub-passage 261. The third communication passage 270 has a port facing the second heat exchange module 110 at the first side portion 210, the first flow passage of the second heat exchange module 110 is in communication with the third communication passage 270. In other word, the first sub-passage 261 is in communication with the third communication passage 270 through the first flow passage of the second heat exchange module 110.

In this embodiment, the connecting member 200 includes a third side portion 230 and a fourth side portion 240. In the stacking direction of the plates, the first side portion 210 is located on one side of the third side portion 230, and the second side portion 220 is located on the other side of the third side portion 230. The first mounting hole 281 has a port at the third side portion, and the second mounting hole 282 has a port at the first side portion. In this way, the throttling unit 500 and the valve unit 400 are located on different sides of the connecting member, so that the fluid management apparatus is more compact, which is beneficial to miniaturization and facilitates of installation of the throttling unit 500 and the valve unit 400. In the stacking direction of the plates, the first side portion 210 is located on one side of the fourth side portion 240, and the second side portion 220 is located on the opposite side of the fourth side portion 240. The third side portion 230 is located above the fourth side portion 240 in the gravity direction. The fluid management apparatus 10 includes a gas-liquid separation portion 600 that is fixedly or limitedly connected to the fourth side portion 240. A first plane is defined, which is perpendicular to the stacking direction of the plates. A first direction is defined in the first plane, and the first direction is parallel to the third side portion 230. In the first direction, at least a part of the gas-liquid separation portion 600 is located on one side of the heat exchange module 100, and at least a part of the fluid management module 300 is located on the other side of the heat exchange module 100. The fluid management module 300 and the gas-liquid separation portion 600 are located on different sides of the connecting member 200. The first heat exchange module 120, the second heat exchange module 110, the fluid management module 300 and the fluid management component are arranged around the connecting member 200, so that the fluid management apparatus 10 has a compact structure and a relatively small volume. The gas-liquid separation portion 600 has a second gas-liquid separation chamber, the third communication passage 270 has a port facing the gas-liquid separation portion 600 at the fourth side portion 240, and the third communication passage 270 is in communication with the second gas-liquid separation chamber. In other embodiments, the gas-liquid separation portion 600 may also be integrated with the connecting member 200, so that the third communication passage 270 has a port in the inner wall of the gas-liquid separation portion 600, and the third communication passage 270 is in communication with the second gas-liquid separation chamber.

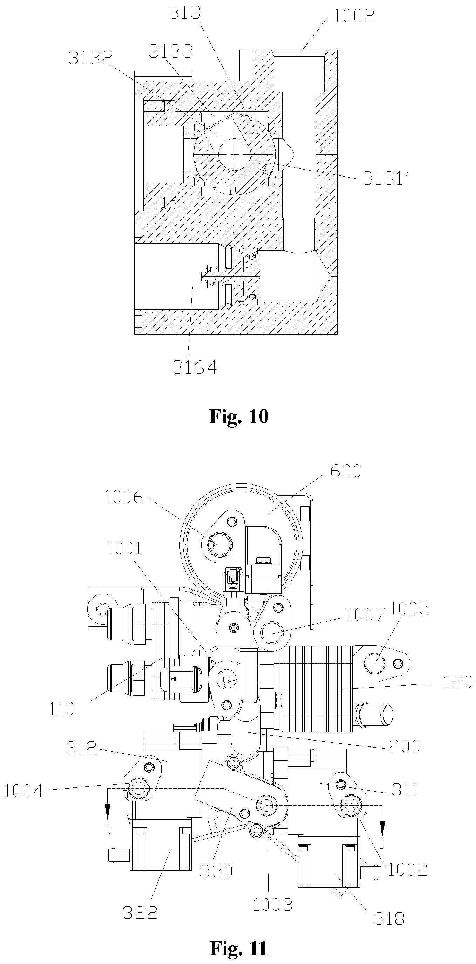

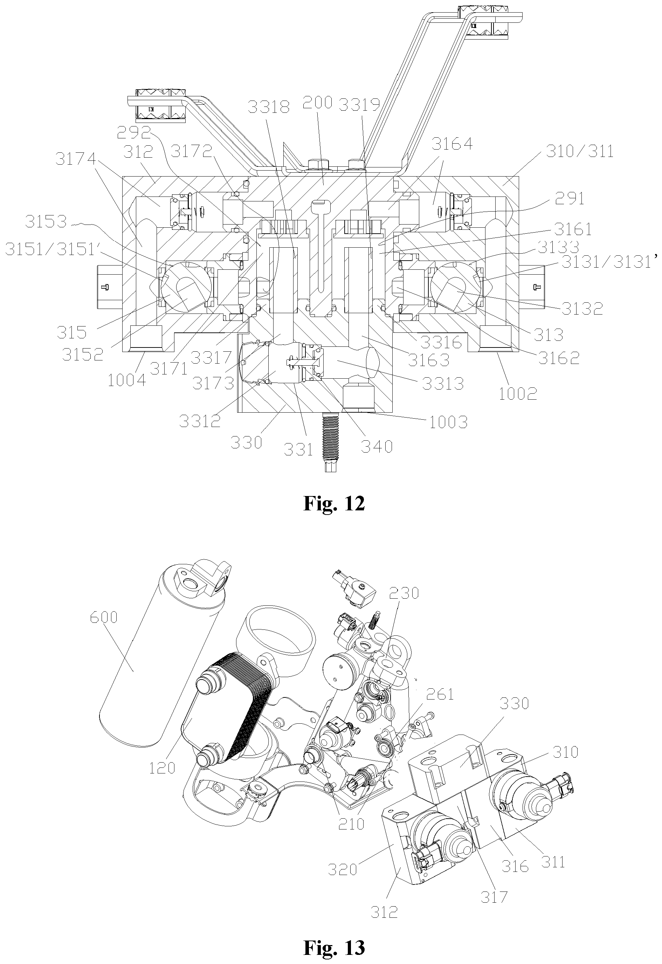

Referring to Fig. 1, Fig. 2, Fig .5 to Fig .7, Fig. 11 and Fig. 12, the fluid management module includes a first block 311 and a second block 312. The fluid management module 300 has a first sub-chamber 3161 and a second sub-chamber 3171. The valve chamber includes a first valve chamber 3133 and a second valve chamber 3153, and the valve core includes a first valve core 313 and a second valve core 315. The first communication passage 250 has a port facing the first block 311 at the second side portion 220, and the first communication passage 250 is in communication with the first valve chamber 3133. In this way, the first flow passage of the first heat exchange module 120 is in communication with the first valve chamber 3133 through the first communication passage 250. The second sub-passage 262 has a port facing the second block 312 at the first side portion 220, and the second sub-passage 262 is in communication with the second valve chamber 3153. The connecting member 200 includes an accommodating portion, in other word, the accommodating portion is a part of the connecting member. The accommodating portion includes a first accommodating portion 291 and a second accommodating portion 292. The first accommodating portion 291 has a first accommodating chamber 291', and the first sub-chamber 3161 includes the first accommodating chamber 291', in other word, the first accommodating chamber 291' is a part of the first sub-chamber 3161. The fluid management apparatus has a first passage 3162, and at least a part of the first passage 3162 is located at the connecting member 200. The first passage 3162 has a port in an inner wall of the first accommodating portion 291, and the first passage 3162 is in communication with the first sub-chamber 3161. The first passage 3162 has a port facing the first valve core 313 in the outer wall of the connecting member 200. Specifically, the first passage 3162 has a port facing the first valve core 313 at the second side portion, the first valve core 313 has a first groove 3131, and the first groove 3131 cooperates with a valve seat of the fluid management apparatus 10 to form a first throttling chamber 3131'. The first valve core 313 is able to communicate the first throttling chamber with the first valve chamber 3133 and the first passage, and the first valve core 313 is spherical, quasi-spherical or cylindrical. The second block 312 is fixedly or limitedly connected to the connecting member 200, and the connecting member 200 is connected to the second block 312 by bolts. The second block 312 has a port facing the connecting member 200, and the second sub-passage 262 is in communication with the second valve chamber 3153, and the second valve chamber 3153 is located in the second block 312. The second accommodating portion 292 has a second accommodating chamber 292', and the second sub-chamber 3171 includes the second accommodating chamber 292'. The conduction passage includes the second passage 3172, and at least a part of the second passage 3172 is located at the connecting member 200. The second passage 3172 is in communication with the second sub-chamber 3171, and the second passage 3172 has a port facing the second valve core 315 at the first side portion. The second valve core 315 has a second groove 3151, and the second groove 3151 cooperates with the valve seat of the fluid management apparatus 10 to form a second throttling chamber 3151'. The second valve core 315 is able to communicate the second throttling chamber with the second valve chamber 3153 and the second passage 3172, and the second valve core 315 is spherical or quasi-spherical or cylindrical. It can be understood that at least a part of the first accommodating portion 291 and at least a part of the second accommodating portion 292 are located between the first side portion and the second side portion in the stacking direction of the plates. In this embodiment, the communication portion is fixedly or limitedly connected to the first accommodating portion and the second accommodating portion. The first accommodating portion 291 and the second accommodating portion 292 are located at the connecting member, in other word, they are integrated with the connecting member, which can simplify the installation steps of the fluid management apparatus.

In this embodiment, during the operation of the fluid management apparatus 10, after being throttled by the first throttling chamber 3131', the refrigerant enters the first sub-chamber 3161 through the first passage 3162 and then is rotated centrifugally in the first sub-chamber 3161. Similarly, after being throttled by the second throttling chamber 3151', the refrigerant enters the second sub-chamber 3171 through the second passage 3172 and then is rotated centrifugally in the second sub-chamber 3171. In addition, the fluid management apparatus 10 has a first gas passage 3163 and a first liquid passage 3164, wherein the first gas passage 3163 and the first liquid passage 3164 are in communication with the first sub-chamber 3161. The first gas passage 3163 is configured to discharge the relative gaseous refrigerant after gas-liquid separation, and the first liquid passage 3164 is configured to discharge the relative liquid refrigerant after gas-liquid separation. The first liquid passage 3164 may also be referred to as a third passage. The third passage has a port in a bottom wall of the first accommodating portion 291, and the third passage is in communication with the first sub-chamber 3161 to facilitate the refrigerant after gas-liquid separation to be discharged out of the fluid management apparatus 10. The fluid management apparatus 10 has a second gas passage 3173 and a second liquid passage 3174, wherein the second gas passage 3173 and the second liquid passage 3174 are in communication with the second sub-chamber 3171. The second gas passage 3173 is configured to discharge the relatively gaseous refrigerant after gas-liquid separation, and the second liquid passage 3174 is configured to discharge the relatively liquid refrigerant after gas-liquid separation. The second liquid passage 3174 may also be referred to as a fourth passage, the fourth passage has a port in a bottom wall of the second accommodating portion 292, and the fourth passage is in communication with the second sub-chamber 3171 to facilitate the refrigerant after gas-liquid separation to be discharged out of the fluid management apparatus 10. In other embodiments, the gas-liquid separation manner of the fluid management apparatus 10 can also be in other forms, and will not be described in detail.

During the operation of the fluid management apparatus 10, the fluid management apparatus 10 includes a first operation mode and a second operation mode. In the first operation mode, the first valve core 313 is able to communicate the first throttling chamber 3131' with the first valve chamber 3133 and the first sub-chamber 3161. The relatively gaseous refrigerant leaves from the fluid management apparatus 10 through the first gas passage 3163, and the relatively liquid refrigerant leaves from the fluid management apparatus 10 through the first liquid passage 3164. The valve unit 400 opens the third sub-passage 263, the throttling unit 500 closes the second sub-passage 262, and the second valve core 315 is able to not communicate the second valve chamber 3153 with the second sub-chamber 3171. In the second operation mode, the first valve core 313 is able to not communicate the first valve chamber 3133 with the first sub-chamber 3161, the second valve core 315 is able to communicate the second throttling chamber 3151' with the second valve chamber 3153 and the second sub-chamber 3171. The valve unit 400 closes the third sub-passage 263, and the relatively gaseous refrigerant leaves from the fluid management apparatus 10 through the second gas passage 3173, and the relatively liquid refrigerant leaves from the fluid management apparatus 10 through the second liquid passage 3174. The throttling unit 500 may be opened in order to throttle and depressurize the refrigerant in the first sub-passage 261. Alternatively the throttling unit 500 may be not opened. Furthermore, the first valve core 313 also has a first conduction passage 3132, which is provided with at least two ports in an outer wall of the first valve core 313. In the second operation mode of the fluid management apparatus 10, the first valve core 313 is able to communicate the first conduction passage 3132 with the first valve chamber 3133 and an outlet of the fluid management apparatus, namely the second port 1002. The first valve core 313 is able to not communicate the first valve chamber 3133 with the first sub-chamber 3161. The second communication passage 260 is an inlet passage of the fluid management apparatus 10, and the second communication passage 260 has a port, namely a first port 1001, at the connecting member 200. Similarly, the second valve core 315 has a second communication hole 3152 that is provided with at least two ports in an outer wall of the second valve core 315. The second valve core 315 is able to communicate the second communication hole 3152 with the second valve chamber 3153 and an outlet of the fluid management apparatus 10, namely a fourth port 1004. In this embodiment, the first block 311, the second block 312, the throttling unit 500, and the valve unit 400 are fixedly or limitedly connected to the connecting member 200. The fluid management apparatus 10 has a first communication passage 250 that is in communication with the first valve chamber 3133. The fluid management apparatus 10 has a second sub-passage 262 that is in communication with the second valve chamber 3153. The valve unit 400 is able to open and close the third sub-passage 263, and the throttling unit 500 is able to adjust the opening degree of the first sub-passage 261. The communication passage is located within the connecting member 200, which is beneficial to avoid internal leakage and also facilitates the miniaturization of the fluid management apparatus 10. In this embodiment, the accommodating portion includes a first accommodating portion 291 and a second accommodating portion 292. In other embodiments, the accommodating portion may also include one of the first accommodating portion 291 and the second accommodating portion 292, in other word, one of the first accommodating portion 291 and the second accommodating portion 292 is located in the connecting member 200, and the other may be located in a block or other structure, which will not be described in detail.

The first fluid control module includes a first control portion 318, the first control portion 318 can drive the first valve core 313 to rotate during the operation of the fluid management apparatus 10. The first control portion 318 includes a first valve stem that is in transmission connection with the first valve core 313. The second fluid control module includes a second control portion 321, and the second control portion 321 includes a second valve stem that is in transmission connection with the second valve core 315. Correspondingly, the first block 311 includes a first valve stem hole portion with a first valve stem hole, a part of the first valve stem is located in the first valve stem hole, and the first valve stem is in a dynamic sealing arrangement with the first valve stem hole portion. Similarly, the second block 312 includes a second valve stem hole portion with a second valve stem hole, a part of the second valve stem is located in the second valve stem hole, and the second valve stem is in a dynamic sealing arrangement with the second valve stem hole portion.

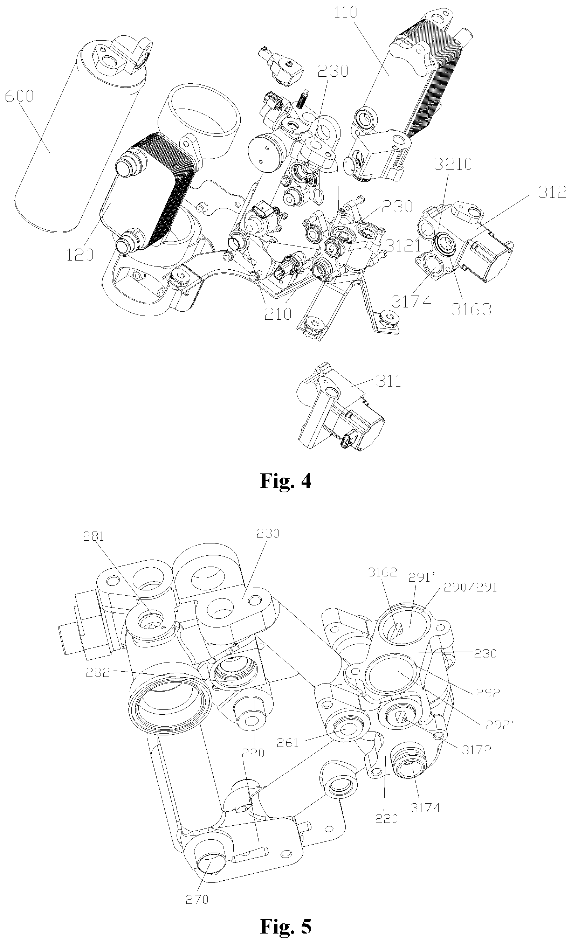

Referring to Fig. 4 and Fig. 8 to Fig. 10, in this embodiment, the first block 311 is fixedly or limitedly connected to the second side portion 220. The first block 311 includes a connecting wall 3110 that faces the second side portion. The first communication passage has a port facing the connecting wall 3110 of the first block 311 at the second side portion. The first block 311 has a first sub-flow passage 3111 that is in communication with the first valve chamber and the first communication passage, and the first passage 3162 has a port facing the connecting wall of the first block 311 at the second side portion 220. The second block 312 is fixedly or limitedly connected to the first side portion 210. The second block 312 includes a connecting wall 3210 that faces the first side portion. The second communication passage 260 has a port facing the connecting wall 3210 of the second block 312 at the first side portion 210. Specifically, the second sub-passage 262 has a port facing the second block 312 at the second side portion 220, and the second sub-passage 262 is in communication with the second valve chamber 3153. The second block 312 has a first sub-passage 3121 that is in communication with the second valve chamber 3153 and the second communication passage 260, and the second passage 3172 has a port facing the second block 3153 at the first side portion.

Referring to Fig. 1, Fig. 2, Fig. 7, Fig. 11 and Fig. 12, the fluid management apparatus 10 has a first port 1001, a second port 1002, a third port 1003, a fourth port 1004, a fifth port 1005, a sixth port 1006 and a seventh port 1007, wherein the fifth port 1005 is in communication with the first flow passage of the first heat exchange module 120. In this embodiment, the fifth port 1005 is located in the first heat exchange module 120 or in a tube or block that is fixedly or limitedly connected to the first heat exchange module 120. The first port 1001 is located at the third side portion 230, and the first port 1001 is in communication with the second communication passage 260. The valve unit 400 is able to open and close the communication passage between the first port 1001 and the second gas-liquid separation chamber. The first port 1001 can be in communication with the first flow passage of the first heat exchange module 120 by the throttling unit 500, the first port 1001 is in communication with the second sub-passage 262, and the first port 1001 can be in communication with the second valve chamber 3153 through the second sub-passage 262. Of course, the first port 1001 may also be located in a pipe or block that is fixedly or limitedly connected to the connecting member 200, and will not be described in detail. The second port 1002 is located in the first block 311. The first block 311 has a passage that communicates the second port 1002 with the first valve chamber 3133. The first valve core 313 enables the first throttling chamber 3131' or the first communication passage 3132 to communicate the first valve chamber 3133 with the second port 1002. In this embodiment, the first liquid passage 3174 is also in communication with the second port 1002. The liquid refrigerant after gas-liquid separation in the first sub-chamber 3161 can flow out of the fluid management apparatus 10 through the second port 1002. The fourth port 1004 is located in the second block 312. The second block 312 has a passage that communicates the second valve chamber 3153 with the fourth port 1004. The first valve core 313 enables the second throttling chamber 3151' or the second communication hole 3152 to communicate the second valve chamber 3153 with the fourth port 1004. The second liquid passage 3174 is also in communication with the fourth port 1004, and the liquid refrigerant after gas-liquid separation in the second sub-chamber 3171 can flow out of the fluid management apparatus 10 through the fourth port 1004. The first gas passage 3163 and the second gas passage 3173 are in communication with the third port 1003. The relatively gaseous refrigerant after gas-liquid separation in the first sub-chamber 3161 can be discharged out of the fluid management apparatus 10 through the third port 1003, and the relatively gaseous refrigerant after gas-liquid separation in the second sub-chamber 3171 can be discharged out of the fluid management apparatus 10 through the third port 1003. The seventh port 1007 is an inlet of the gas-liquid separation portion 600, and the sixth port 1006 is an outlet of the gas-liquid separation portion 600. In this embodiment, the sixth port 1006 is located in the gas-liquid separation portion 600, and the seventh port 1007 is located in the third side portion 230, and the seventh port 1007 is in communication with the second gas-liquid separation chamber through a first interface port. In a more specific embodiment, in the direction of gravity, the first port 1001, the second port 1002, the third port 1003, the fourth port 1004, the fifth port 1005, the sixth port 1006 and the seventh port 1007 are oriented upward, facilitating the connection of the fluid management apparatus 10 to other components or pipes in the thermal management system.

Referring to Fig. 1, Fig. 2, Fig. 11 and Fig. 12, the fluid management module includes a communication portion 330 that is fixedly or limitedly connected to the connecting member. In this embodiment, the communication portion 330 is fixedly or limitedly connected to the third side portion. Herein, the fixed connection includes the case that the communication portion 330 is integrated with the connecting member 200. The communication portion 330 includes an accommodating portion with an accommodating chamber, at least a part of the valve component 340 is located in the accommodating chamber, and the valve component 340 is fixedly or limitedly connected to the accommodating portion. In this embodiment, at least a part of the first gas passage 3163 is located in the communication portion 330, and at least a part of the second gas passage 3173 is located in the communication portion 330. Specifically, the communication portion 330 has a first connecting port, a first communication chamber 3312 and a second communication chamber 3313, where the first communication chamber 3312 is a part of the second gas passage 3173, and the second communication chamber 3313 is a part of the first gas passage 3163. The first connecting port is the third port 1003 of the fluid management apparatus 10 or is in communication with the third port 1003, the first communication chamber 3312 is in communication with the second sub-chamber 3171, and the second communication chamber 3313 is in communication with the first sub-chamber 3161. The valve component 340 is able to unidirectional communicate the first communication chamber 3312 with the second communication chamber 3313, and the first connecting port is in communication with the second communication chamber 3313. In this way, the relatively gaseous refrigerant in the second sub-chamber 3171 can flow out of the fluid management apparatus 10 through the first connecting port by the valve component 340. The relatively gaseous refrigerant in the first sub-chamber 3161 can flow out of the fluid management apparatus 10 through the first connecting port, but cannot flow in the second sub-chamber 3171 due to the valve component 340. In this embodiment, at least a part of the communication portion 330 is located above the third side portion in the direction of gravity, and the connecting member 200 is fixed to the communication portion 330 by bolts. In this way, the fluid management apparatus 10 have a common gas outlet, which reduces the number of interface ports of the fluid management apparatus 10 and facilitate the connection of the fluid management apparatus 10 to other components of the thermal management system. The fluid management apparatus 10 is provided with a valve component 340, which can prevent the gas in the first sub-chamber 3161 from entering the second sub-chamber 3171.

In a specific embodiment, the communication portion 330 includes a first inserting portion 3316 and a second inserting portion 3317, and the fluid management apparatus 10 includes a first conduit portion 3318 and a second conduit portion 3319. A conduit orifice of the first conduit portion 3318 is arranged away from the first inserting portion 3316, and a conduit orifice of the second conduit portion 3319 is arranged away from the second inserting portion 3317. The first conduit portion 3318 is integrated with or fixedly or limitedly connected to the first inserting portion 3316, and the second conduit portion 3319 is integrated with or fixedly or limitedly connected to the second inserting portion 3317. A part of the first gas passage 3163 is located in the first conduit portion 3318 and the first inserting portion 3316, and a part of the second gas passage 3173 is located in the second conduit portion 3319 and the second inserting portion 3317. The fluid management apparatus 10 is provided with the inserting portions and corresponding accommodating portions, which facilitates of positioning the communication portion and is beneficial for the installation during installation.

In this embodiment, the valve component 340 is a component in form of being unidirectional. The communication portion 330 includes a first hole portion 331, at least a part of the first communication chamber 3312 is located in the first hole portion 331, and at least a part of the second communication chamber 3313 is located in the first hole portion 331. The first hole portion 331 includes an accommodating portion, and the communication portion 330 has a first communication port and a second communication port. The first communication port is located in the wall of the first hole portion 331, and the second communication port is located in the wall of the first hole portion 331, where the first communication port is in communication with the second sub-chamber 3171, and the second communication port is in communication with the first sub-chamber 3161. In the axial direction of the first hole portion 331, the first communication port is located on one side of the accommodating portion, and the second communication port is located on the other side of the accommodating portion. In other embodiments, the valve component 340 may also be a solenoid valve or a ball valve, which will not be described in detail. Compared with the valve component 340 in type of solenoid valve or ball valve, the valve component 340 herein has the advantages of easy installation and low cost, and does not need to be electrical controlled.

The fluid management apparatus 10 includes a first fixing portion, a second fixing portion, a first mating portion and a second mating portion, where the first fixing portion is fixedly or limitedly connected to the first mating portion, and the second fixing portion is fixedly or limitedly connected to the second mating portion. In this embodiment, the communication portion 330 is fixed to the third side portion by bolts. One of the first fixing portion and the first mating portion is located at the communication portion 330, and the other is located at the third side portion. One of the second fixing portion and the second mating portion is located at the communication portion 330, and the other is located at the third side portion. In this embodiment, the first mating portion and the second mating portion are located at the third side portion.

In the first operation mode of the fluid management apparatus 10, the first valve core 313 is able to communicate the first valve chamber 3133 with the first sub-chamber 3161 through the first throttling chamber 3131', and the valve component 340 is able to not communicate the second communication chamber 3313 with the first communication chamber 3312, so that the relatively gaseous refrigerant in the first sub-chamber 3161 flows out of the fluid management apparatus 10 through the first connecting port, which is an outlet of the fluid management apparatus 10. In the second operation mode, the first valve core 313 is able to not communicate the first valve chamber 3133 with the first sub-chamber 3161, the second valve core 315 is able to communicate the second valve chamber 3153 with the second sub-chamber 3171 through the second throttling chamber 3151', and the valve component 340 is able to communicate the first communication chamber 3312 with the second communication chamber 3313, and the first connecting port is an outlet of the fluid management apparatus 10. Of course, the fluid management apparatus 10 may not be provided with the communication portion 330, the first gas passage 3163 has an outlet in the fluid management apparatus, and the second gas passage 3173 has an outlet in the fluid management apparatus, which will not be described in detail.

Referring to Fig.13 to Fig. 15, the fluid management module 300 includes at least one of a first fluid management module 310 and a second fluid management module 320. In this embodiment, the fluid management module 300 includes the first fluid management module 310 and the second fluid management module 320. The first fluid management module 310 includes a first valve core 313, a first block 311 and a third block 316. The first block 311 is fixedly or limitedly connected to the third block 316, and the first block 311 is fixedly or limitedly connected to the connecting member 200. In this embodiment, the connecting member 200 is connected to the first block 311 by bolts. The first fluid management module 310 has a first throttling chamber 3131', a first valve chamber 3133 and a first sub-chamber 3161, where the first valve chamber 3133 is located within the first block 311, the first valve core 313 is located in the first valve chamber 3133, and the first communication passage 250 has an port facing the first block 311 at the second side portion, and the first valve chamber 3133 is in communication with the first communication passage 250. At least a part of the first sub-chamber 3161 is located in the third block 316. The first fluid management module 310 has a first passage 3162, at least a part of the first passage 3162 is located in the third block 316, the first passage 3162 is in communication with the first sub-chamber 3161, and the first passage 3162 has a port facing the first valve core 313. The first valve core 313 has a first groove 3131, which cooperates with a valve seat of the first fluid management module 310 to form the first throttling chamber 3131'. The first valve core 313 is spherical or quasi-spherical or cylindrical. The second fluid management module 320 includes a second valve core 315, a second block 312 and a fourth block 317, where the second block 312 is fixedly or limitedly connected to the fourth block 317, and the second block 312 is fixedly or limitedly connected to the connecting member 200, and the connecting member 200 is connected to the second block 312 by bolts. The fluid management module 300 has a second throttling chamber 3151', a second valve chamber 3153 and a second sub-chamber 3171, where the second valve chamber 3153 is located in the second block 312, and the second valve core 315 is located in the second valve chamber 3153. At least a part of the second sub-chamber 3171 is located in the fourth block 317. The second fluid management module 310 has a second passage 3172, and at least a part of the second passage 3172 is located in the fourth block 317. The second passage 3172 is in communication with the second sub-chamber 3171. The second passage 3172 has a port facing the second valve core 315 at the fourth block 317, and the second passage 3172 can be in communication with the second valve chamber 3153. The second sub-passage 262 has a port facing the second block at the first side portion, and the second sub-passage 262 is in communication with the second valve chamber 3153. The second valve core 315 has a second groove 3151, the second groove 3151 cooperates with a valve seat of the second fluid management module 320 to form the second throttling chamber 3151'. The second valve core 315 is spherical or spherical or cylindrical. In this embodiment, at least a part of the third block and at least a part of the fourth block are located between the first side portion and the second side portion in the stacking direction of the plates, so that the structure of the fluid management apparatus is relatively compact.

It should be noted that the above embodiments are merely used to illustrate the present application and not to limit the technical solutions described in the present application. Although the present application has been described herein in detail with reference to the above embodiments in this specification, those of ordinary skill in the art should understand that those skilled in the art may still modify or equivalently replace the present application, and all technical solutions and its improvements that do not apart from the spirit and scope of the present application should be included in the scope of the claims of the present application.

## Claims

1. A fluid management apparatus, comprising:
a heat exchange module;
a fluid management module; and
a connecting member, wherein
the fluid management apparatus is provided with a communication passage, at least a part of the communication passage is located at the connecting member, and the communication passage is in communication with a flow passage of the heat exchange module;
at least a part of the fluid management module is fixedly or limitedly connected to the connecting member,
the fluid management module comprises a valve core, which is provided with a conduction passage,
the fluid management module is provided with a throttling chamber, a valve chamber and a first gas-liquid separation chamber, wherein the valve chamber is in communication with the communication passage, the valve core is located in the valve chamber;
in an operating state of the fluid management apparatus, the valve core is able to communicate the valve chamber with the first gas-liquid separation chamber through the throttling chamber or through the conduction passage;
the heat exchange module comprises at least one of a first heat exchange module and a second heat exchange module, the connecting member comprises a first side portion and a second side portion, the second heat exchange module is fixedly or limitedly connected to the first side portion, and the first heat exchange module is fixedly or limitedly connected to the second side portion; and
the heat exchange module comprises a plurality of stacked plates,
in a stacking direction of the plates, at least a part of the first heat exchange module is located on one side of the connecting member, at least a part of the second heat exchange module is located on the other side of the connecting member, the first heat exchange module and the second heat exchange module are located on different sides of the connecting member, and at least a part of the fluid management module is located between the first side portion and the second side portion.

2. The fluid management apparatus according to claim 1, wherein the connecting member comprises a third side portion, in the stacking direction of the plates, the first side portion is located on one side of the third side portion, and the second side portion is located on the other side of the third side portion;
wherein the fluid management apparatus comprises a valve unit and a throttling unit, the connecting member comprises a mounting portion, which is provided with a first mounting hole and a second mounting hole, one of the first mounting hole and the second mounting hole has a port in a wall of the third side portion, the other one of the first mounting hole and the second mounting hole has a port in the first side portion or the second side portion, at least a part of the valve unit is located in the first mounting hole, and at least a part of the throttling unit is located in the second mounting hole.

3. The fluid management apparatus according to claim 1 or 2, wherein the connecting member comprises a third side portion, and the fluid management apparatus comprises a gas-liquid separation portion, which is fixedly or limitedly connected to the connecting member, the gas-liquid separation portion has a second gas-liquid separation chamber, and the communication passage is in communication with the second gas-liquid separation chamber;
wherein a first plane is defined, which is perpendicular to the stacking direction of the plates, a first direction is defined in the first plane and the first direction is parallel to the third side portion, in the first direction, at least a part of the gas-liquid separation portion is located on one side of the heat exchange module, and at least a part of the fluid management module is located on the other side of the heat exchange module, the fluid management module and the gas-liquid separation portion are located on different sides of the connecting member.

4. The fluid management apparatus according to claim 3, wherein the connecting member comprises a fourth side portion, in the stacking direction of the plates, the first side portion is located on one side of the fourth side portion, the second side portion is located on the opposite side of the fourth side portion, and the third side portion is located above the fourth side portion in a direction perpendicular to the third side portion;
wherein the gas-liquid separation portion is fixedly or limitedly connected to the fourth side portion, and the communication passage has a port facing the gas-liquid separation portion at the fourth side portion.

5. The fluid management apparatus according to any one of claims 1-4, wherein the fluid management module comprises a first block and a second block, the valve chamber comprises a first valve chamber and a second valve chamber, the first valve chamber is located in the first block, the second valve chamber is located in the second block, the valve core comprises a first valve core and a second valve core, the first valve core is located in the first valve chamber and the second valve core is located in the second valve chamber, the first valve core comprises a first conduction passage, the second valve core comprises a second conduction passage, the throttling chamber comprises a first throttling chamber and a second throttling chamber, and the first gas-liquid separation chamber comprises a first sub-chamber and a second sub-chamber;
wherein the fluid management apparatus further comprises a first accommodating portion and a second accommodating portion, the first block and the second block are fixedly or limitedly connected to the connecting member, respectively, the first accommodating portion is integrated with the connecting member, and the second accommodating portion is integrated with the connecting member;
wherein at least a part of the first sub-chamber is located in the first accommodating portion, and at least a part of the second sub-chamber is located in the second accommodating portion;
wherein the connecting member has a first passage, the first passage has a port in an inner wall of the first accommodating portion, the first passage has a port facing the first block in the connecting member;
wherein the connecting member has a second passage, the second passage has a port in an inner wall of the second accommodating portion, and the second passage has a port facing the second block in the connecting member;
wherein the first valve core is able to communicate the first valve chamber with the first passage through the first throttling chamber or the first conduction passage; and
wherein the second valve core is able to communicate the second valve chamber with the second passage through the second throttling chamber or the second conduction passage.

6. The fluid management apparatus according to any one of claims 1-4, wherein the fluid management module comprises a first block and a second block, the valve chamber comprises a first valve chamber and a second valve chamber, the first valve chamber is located in the first block, the second valve chamber is located in the second block, the valve core comprises a first valve core and a second valve core, the first valve core is located in the first valve chamber and the second valve core is located in the second valve chamber, the first valve core comprises a first conduction passage, the second valve core comprises a second conduction passage, the throttling chamber comprises a first throttling chamber and a second throttling chamber, the first gas-liquid separation chamber comprises a first sub-chamber and a second sub-chamber;
wherein, in the stacking direction of the plates, at least a part of the first accommodating portion and at least a part of the second accommodating portion are located between the first side portion and the second side portion; or, the fluid management module comprises a third block and a fourth block, the first block is fixedly or limitedly connected to the third block, the second block is fixedly or limited connected to the fourth block, at least a part of the first sub-chamber is located in the third block, at least a part of the second sub-chamber is located in the fourth block;
wherein the third block has a first passage, which is in communication with the first sub-chamber, and the first passage has a port facing the first block in the third block;
wherein the fourth block has a second passage, which is in communication with the second sub-chamber, and the second passage has a port facing the second block in the fourth block;
wherein, in the stacking direction of the plates, at least a part of the third block and at least a part of the fourth block are located between the first side portion and the second side portion;
wherein the first valve core is able to communicate the first valve chamber with the first passage through the first throttling chamber or the first conduction passage; wherein the second valve core is able to communicate the second valve chamber with the second passage through the second throttling chamber or the second conduction passage.

7. The fluid management apparatus according to claim 5 or 6, wherein the communication passage comprises a first communication passage and a second communication passage, the first communication passage has two ports at the second side portion, one of the ports faces the first heat exchange module and the other one of the ports faces the first block, and the first communication passage is in communication with the first valve chamber;
wherein the second communication passage has a port at the third side portion, the second communication passage comprises a first sub-passage, a second sub-passage and a third sub-passage, the first sub-passage has a port facing the second heat exchange module at the first side portion, the second sub-passage has a port facing the second block at the first side portion and the second sub-passage is in communication with the second valve chamber, the third sub-passage has a port facing the gas-liquid separation portion at the fourth side portion and the third sub-passage is in communication with the second gas-liquid separation chamber.

8. The fluid management apparatus according to claim 7, wherein the second heat exchange module has a first flow passage, the first flow passage of the second heat exchange module is in communication with the first sub-passage, a wall of the second mounting hole has a port in communication with the first sub-passage, the throttling unit is able to adjust an opening degree of the first sub-passage, a wall of the first mounting hole has a port in communication with the third sub-passage, and the valve unit is able to open or close the third sub-passage.

9. The fluid management apparatus according to claim 8, wherein the fluid management apparatus has a first port, a second port, a third port, a fourth port, a fifth port, a sixth port and a seventh port, the fifth port is in communication with the first flow passage of the first heat exchange module;
wherein the first valve chamber is able to be in communication with the second port through the first throttling chamber or the first conduction passage, and the first sub-chamber is in communication with the second port;
wherein the second valve chamber is able to be in communication with the fourth port through the second throttling chamber or the second conduction passage, and the second sub-chamber is in communication with the fourth port;
wherein the first sub-chamber and the second sub-chamber are in communication with the third port;
wherein the valve unit is able to open and close a communication passage between the first port and the second gas-liquid separation chamber, the first port is able to be in communication with the flow passage of the second heat exchange module through the throttling unit, and the first port is in communication with the second sub-passage;
wherein the seventh port is in communication with the second gas-liquid separation chamber, the seventh port is an inlet of the gas-liquid separation portion, and the sixth port is an outlet of the gas-liquid separation portion.

10. The fluid management apparatus according to claim 8, wherein the fifth port is located in the first heat exchange module or located in a pipe or block fixedly or limitedly connected to the first heat exchange module, the second port is located in the first block, the fourth port is located in the second block, the third port is located in the fluid management module, the first port is located in the third side portion, the sixth port is located in the gas-liquid separation portion, the seventh port is located in the third side portion, and the first port, the second port, the third port, the fourth port, the fifth port, the sixth port and the seventh port have the same orientation in the direction perpendicular to the third side portion.
